# EUROPEAN PATENT APPLICATION

(11) **EP 3 771 741 A1**
(43) Date of publication of application: **03.02.2021**
(21) Application number: 19188864.3
(22) Date of filing: 29.07.2019
(51) Int. Cl.: C11D 1/62, C11D 3/48, C11D 11/00, A01N 43/40

(54) **FABRIC TREATMENT**

(71) Applicant: The Procter & Gamble Company, Cincinnati, OH 45202 (US)
(72) Inventor: WILKINSON, Craig Adam, Newcastle upon Tyne, NE12 9TS (GB); PEREZ-PRAT VINUESA, Eva Maria, Newcastle upon Tyne, NE12 9TS (GB)
(74) Representative: P&G Patent Belgium UK

(57) **Abstract**

A method of treating a fabric comprising the step of contacting the fabric with an aqueous liquor comprising a bispyridinium alkane antimicrobial active and wherein the aqueous liquor is substantially free of anionic surfactant.

## Description

### FIELD OF INVENTION

This invention relates to methods of treating fabrics and fabric laundering/washing processes.

### BACKGROUND OF THE INVENTION

Fabric laundering processes provide good soil and stain removal but they do not always kill or remove the microbes present on fabrics and in the wash water. There may be a desire to provide fabric sanitization either during the laundry washing process or as an additional fabric treatment step in which the fabric is treated with a composition that may decrease the microbial load on the fabrics and/or on the treatment water, to promote further cleaning benefits. Such treatments may be particularly useful where fabrics are prone to develop malodour, for example if the fabric is not dried immediately, or where fabrics are re-wet during use and may stay damp for some time: for example if wet, laundered fabrics may remain in a washing machine for some time prior to drying, for example over 20 minutes or longer prior to drying; if laundered fabrics will be line-dried in a warm, humid environment or indoors; or if the fabrics will be damp during use, such as towels or sportswear left prior to washing. The treatment may also be particularly useful for fabrics that are not suitable to be washed at temperature above 30° C, or to be treated with bleach and harsh detergents, such as for example wool, silk, lycra, spandex and/or delicate and dark coloured garments.

As the laundry washing process becomes more energy and water efficient; wash times, wash temperatures and water volumes for rinsing are all being reduced. Also, chemical compositions for use in the process are being reformulated to reduce their environmental impact. In addition, there is an increasing number of fabrics that cannot be washed at high temperature, or with bleach-containing detergents.

Partly as a result of these changes consumers are increasingly concerned that the laundry washing process may not completely remove or kill any microbes that may be present on the fabrics or the wash water. Consumers can easily judge the performance of their detergent on cleaning stains and removing malodours, but they find it hard to be sure that any microbes have also been removed or killed. They want to wash at lower temperatures, and to use less harsh and fewer chemicals in the laundry washing process to be energy and water efficient and to better care for their garments but they worry that their laundry washing process does not leave their laundry hygienically clean as microbes are known to survive these washing conditions. This leads to an unmet consumer need for sufficient fabric sanitization.

WO 2018/108466 A1 discloses a method for adding a biocidal composition to a laundry washing process by adding a dose of a liquid composition to the rinse aid dispenser of an automatic washing machine, optionally together with a dose of liquid fabric conditioner in the same dispensing compartment, the composition comprising one or more water soluble quaternary ammonium compounds and one or more water soluble organic hydroxy acids. The release of quaternary ammonium compounds to the environment through waste water is not desirable from an environmental view point. There is therefore a need for a fabric treatment that can be used to provide antimicrobial benefits and that present a good environmental profile.

### SUMMARY OF THE INVENTION

The present invention provides a method of treating a fabric. The method involves contacting the fabric with an aqueous liquor. The aqueous liquor comprises a bispyridinium alkane. Preferably the bispyridinium alkane is octenidine dihydrochloride. The method provides fabric sanitization. The method can be part or independent of the laundry washing process. The invention is not restricted to machine washing but it can also provide a hygiene benefit when used in a hand wash laundry process. If part of a laundry washing process, the method can take place in the pre-wash, main wash or rinse. If the method is not part of the laundry washing process, it can be performed as a soaking step, inside or outside of the washing machine.

### DETAILED DESCRIPTION OF THE INVENTION

The present invention encompasses a method of treating a fabric with an aqueous liquor comprising a bispyridinium alkane. The method provides fabric sanitization and sanitization of the wash liquor that can give rise to better cleaning.

As used herein, the articles including "the," "a" and "an" when used in a claim or in the specification, are understood to mean one or more of what is claimed or described.

As used herein, the terms "include," "includes" and "including" are meant to be non-limiting.

As used herein, the terms "active" and "agent" are used interchangeably.

The terms "microorganism" or "microbe" as used herein are intended to include cellular organisms, both unicellular and multicellular that are less than 5 mm in length, and include but are not limited to bacteria, fungi, prions, enveloped and non-enveloped viruses, archaea, protists, protozoa or oocysts formed by protozoa, green algae, plankton, planarian, amoebas and yeasts, or spores formed by any of these. The terms "microorganism" or "microbe" include the single or planktonic microbes that may contaminate surfaces, as well as communities of microbes that grow as biofilms on surfaces.

The term "antimicrobial" as used herein refers to a compound that exhibits microbicide or microbiostatic properties that enables the compound to kill, destroy, inactivate, or neutralize a microorganism; or to mitigate, prevent, or reduce the growth, ability to survive, or propagation of a microorganism. In the context of antimicrobial, the term "treat" means to kill, destroy, inactivate, or neutralize a microorganism; or to prevent or reduce the growth, ability to survive, or propagation of a microorganism

As used herein, the term "alkoxy" is intended to include C1-C8 alkoxy and C1-C8 alkoxy derivatives of polyols having repeating units such as butylene oxide, glycidol oxide, ethylene oxide or propylene oxide. The terms "ethylene oxide," "propylene oxide" and "butylene oxide" may be shown herein by their typical designation of "EO," "PO" and "BO," respectively.

As used herein, unless otherwise specified, the terms "alkyl" is intended to include C1-C18 alkyl groups, or even C1-C6 alkyl groups.

As used herein, unless otherwise specified, the term "aryl" is intended to include C3-12 aryl groups.

As used herein, unless otherwise specified, the term "arylalkyl" and "alkaryl" are equivalent and are each intended to include groups comprising an alkyl moiety bound to an aromatic moiety, typically having C1-C18 alkyl groups and, in one aspect, C1-C6 alkyl groups.

The term "substantially free of' or "substantially free from" as used herein refers to either the complete absence of an ingredient or a minimal amount thereof merely as impurity or unintended byproduct of another ingredient. A composition that is "substantially free" of/from a component means that the composition comprises less than about 0.01%, or less than about 0.001%, or even 0%, by weight of the composition, of the component.

In this description, all concentrations and ratios are on a weight basis of the composition unless otherwise specified.

Unless otherwise noted, all component or composition levels are in reference to the active portion of that component or composition, and are exclusive of impurities, for example, residual solvents or by-products, which may be present in commercially available sources of such components or compositions.

All measurements are performed at 25°C unless otherwise specified.

In the method of the invention the fabric is treated by contacting the fabric with an aqueous liquor comprising a bispyridinium alkane antimicrobial active. Preferably the aqueous liquor is formed by adding to water a composition comprising the antimicrobial active and optionally further adjuncts. The fabric is contacted with said aqueous liquor in a contacting step (also referred to herein as a treatment step), as part of a laundry washing process or independent of it.

The contacting step may be a pre-treatment step prior to a laundry washing process. The pre-treatment step can take place inside or outside an automatic washing machine. The pre-treatment step may involve soaking the fabric in an aqueous liquor comprising the bispyridinium alkane antimicrobial active, preferably octenidine dihydrochloride, and optionally some adjuncts. The duration of the pre-treatment step may be variable. The pre-treatment step may for example last at least 5 minutes but no more than 24 hours.

The contacting step may be part of a laundry washing process and can be done by hand or using an automatic washing machine. When the contacting step takes place during the wash of a laundry washing process the aqueous liquor comprising the antimicrobial bispyridinium alkane, preferably octenidine dihydrochloride, also comprises other agents to provide stain and soil removal in addition to sanitization. The duration of the washing step may be variable. The washing step may for example last from 10 minutes to 3 hours.

The contacting step may be a pre- or post-wash step taking place before or after the fabrics have been washed. This post-wash step can take place inside an automatic washing machine as part of any of the rinsing cycles of the rinsing process, or as an additional treatment once the rinsing cycles have been completed. The antimicrobial bispyridinium alkane can be delivered from the rinse dispenser of a washing machine.

The post-wash step can also take place outside the washing machine, as part of the rinsing steps of a hand wash process. The post-wash step may involve soaking the washed fabrics in an aqueous liquor comprising an antimicrobial bispyridinium alkane, preferably octenidine dihydrochloride, and, optionally, some adjuncts. The duration of the post-wash treatment step may be variable. The post-wash treatment step may for example last from 3 minutes to 1 hour.

The contacting/treatment step can comprise a pre-washing step and the contacting step is a pre-wash. For example, the method of the invention may comprise the steps of (i) in a contacting step, pre-treating the fabric with an aqueous liquor comprising a bispyridinium alkane antimicrobial active, preferably octenidine dihydrochloride, for a variable amount of time, (ii) washing the fabric in a laundering step using a composition to provide stain and soil removal, (iii) rinsing the fabrics one or more times with water, this rinsing step may comprise products known as fabric enhancers or fabric conditioners to enhance fabric properties such as freshness or softness (iv) drying the fabrics in a drying step.

Alternatively the contacting/treatment step takes place during a washing step. For example, the method of the invention may comprise the steps of (i) in a contacting step, treating the fabrics in a laundering step with an aqueous liquor comprising a bispyridinium alkane antimicrobial active, preferably octenidine dihydrochloride, and additional agents to provide stain and soil removal in addition to sanitization, (ii) rinsing the fabrics one or more times with water, and optionally a fabric enhancer product (iii) drying the fabrics in a drying step. The process can take place outside or inside an automatic washing machine. The duration of the washing step may be variable.

Alternatively the contacting/treatment step takes place during a rinse step. For example, the method of the invention may comprise the steps of (i) in a washing step, treating a fabric with an aqueous wash liquor; (ii) optionally rinsing the fabric one or two or more times with water; and (iii) in a contacting step, contacting the fabric with the aqueous liquor comprising a bispyridinium alkane antimicrobial active, preferably octenidine dihydrochloride during one of the rinses. Step (iii) is preferably a rinse step in a hand-washing or machine-washing fabric laundering process. Following the contacting step, the fabric is dried in a drying step (iv). A further additional rinse step may be provided between steps (iii) and (iv) however it may be preferred for the fabric to be dried immediately after step (iii).

The antimicrobial aqueous liquor to be used in the method of the present invention is preferably formed by adding to water a composition comprising the bispyridinium alkane antimicrobial active, preferably octenidine hydrochloride, and optionally further adjuncts. The antimicrobial aqueous liquor to be used in the method of the present invention may comprise from 10 ppm to 25000 ppm, preferably from 20 ppm to 15000 ppm, more preferably from 25 ppm to 10000 ppm, more preferably from 30 ppm to 5000 ppm of the bispyridinium alkane. The antimicrobial aqueous liquor is substantially free of anionic surfactant, i.e. comprises less than 20, more preferably less than 10 ppm of anionic surfactant. Steps of the washing process other than the step in which the bispyridinium alkane is delivered, can comprise anionic surfactant. For example, if the bispyridinium alkane is delivered in the pre-wash, then the main wash can comprise anionic surfactantor if the bispyridinium alkane is delivered in the rinse, then the main wash may comprise anionic surfactant.

When the contacting/treatment step is a wash step generally, an effective amount of a detergent composition is added to water. The detergent composition typically comprises a surfactant system and optional cleaning adjuncts. The surfactant system is substantially free of anionic surfactant. The surfactant system preferably comprises one or more surfactants selected from the group consisting of: nonionic surfactants, zwitterionic surfactants, and amphoteric surfactants. These surfactants are preferred over anionic surfactants as anionic surfactants decrease the antimicrobial efficacy of the bispyridmium alkane. The bispyridmium alkane antimicrobial active may be added to the water as part of the detergent composition or as an additive.

In the washing step, an effective amount of the detergent composition added to water to form aqueous laundering solutions can comprise amounts sufficient to form from about 500 to 25,000 ppm, or from 500 to 15,000 ppm, or from about 1,000 to 3,000 ppm of the detergent compositions in the aqueous washing solution.

The wash liquor may comprise 40 litres or less of water, or 30 litres or less, or 20 litres or less, or 10 litres or less, or 8 litres or less, or even 6 litres or less of water.

Smart in-wash delivery devices may be configured to enable sequential release of the bispyridmium alkane antimicrobial active.

Drying of the fabric may be done by any conventional means either in domestic or industrial settings: machine drying or open-air drying. The fabric may comprise any fabric capable of being laundered in normal consumer or institutional use conditions, and the invention is suitable for synthetic textiles such as polyester and nylon and natural fabrics comprising cellulosic fabrics and mixed fabrics comprising synthetic and natural fibres, such as polycotton. The water temperature in the contacting step is typically in the range from about 5 °C to about 90 °C, though lower water temperatures up to 60 or 40 or 30 or 15 °C are preferred. The water to fabric ratio is typically from about 1:1 to about 30:1.

The method of the present invention may deliver cleaning benefits. The method of the present invention delivers improved antimicrobial activity in the aqueous liquor and/or on the treated fabric.

### Antimicrobial agent

The method of the invention uses bispyridmium alkanes, such as the ones described in GB1533952. The term bispyridmium alkane comprises the bis[4-(substituted-amino)-1-pyridinium]alkanes of the general formulae (I) or (II) 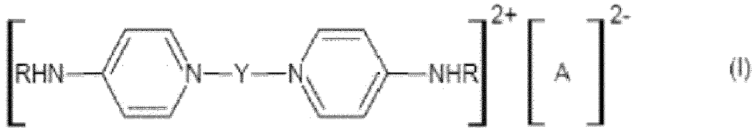 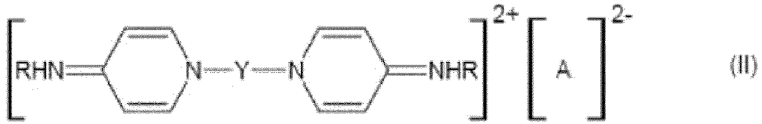 in which
Y is an alkylene or alkyl group having 4 to 18 carbon atoms,
R represents an alkyl group having 6 to 18 carbon atoms or a cycloalkyl group having 5 to 7 carbon atoms or a phenyl group with or without halogen substitution, and A is an anion or several anions.

A may be a monovalent, divalent or a polyvalent anion, for example chloride, bromide, phosphate or orthosilicate. A may also be an organic acid having the formula R4-COO∼, wherein R4 is hydrogen, hydroxyl, or C1-C40 alkyl.

Bispyridinium alkanes of the present invention comprise the various prototypes of the compounds of the formula (I) and (II) such as, for example, the ones disclosed in GB1533952 and DE19647692A1.

Other suitable bispyridinium alkanes comprise an organic acid salt of a bispyridine amine where the organic acid contains from about 4 to about 30 carbon atoms, such as, for example, the ones described in WO2014100807. Suitable organic acids include but are not limited to, carboxylic acids, such as (C1-C40) alkanecarboxylic acids which, for example, are unsubstituted or substituted by halogen, saturated or unsaturated dicarboxylic acids, such as hydroxycarboxylic acids, such as amino acids, such as (C1-C40) alkylsulfonic acids. Additional organic acids from which salts can be derived include, for example, acetic acid, propionic acid, phosphoric acid, glycolic acid, pyruvic acid, oxalic acid, maleic acid, malonic acid, succinic acid, fumaric acid, tartaric acid, citric acid, benzoic acid, cinnamic acid, mandelic acid, methanesulfonic acid, ethanesulfonic acid, p-toluenesulfonic acid, glycyrrhizinic acid, salicylic acid, stearic acid, phosphonic acid, trifluoroacetic acid, cyanoacetic acid, 4-cyanobenzoic acid, 2-chlorobenzoic acid, 2-nitrobenzoic acid, phenoxyacetic acid, benzenesulfonic acid. Preferred are salts of stearate such as bispyridinium alkane distearate.

Preferred bispyridinium alkane is octenidine dihydrochloride (R = n-octyl, Y = n-decenyl; A = 2 × Cl, hereinbelow "octenidine" CAS number 70775-75-6).

### Additional antimicrobial actives

### Quaternary ammonium compounds

Quaternary ammonium compounds may be used as additional antimicrobial actives in the method of the present invention. Quaternary ammonium compounds include compounds of formula (A): 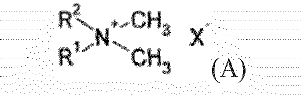 wherein R¹ and R² are each independently a straight chain, unsubstituted and uninterrupted C₈-C₁₂ alkyl group and X" is a halide anion such as chloride, bromide, fluoride, iodide or sulphonate, saccharinate, carbonate or bicarbonate, and benzalkonium compounds having the formula (B) 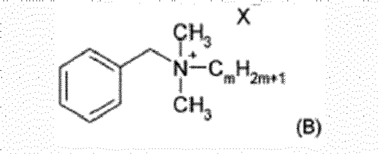 wherein m is from 8 to 18, and X" is a halide anion such as chloride, bromide, fluoride, iodide, sulphonate, saccharinate, carbonate or bicarbonate. This benzalkonium compounds usually comprise a mixture of Cs-Cis alkyl groups, particularly a mixture of straight chain, unsubstituted and uninterrupted alkyl groups such as n-C₈H₁₇ to n-C₁₈H₃₇, mainly n-C₁₂H₂₅ (dodecyl), n-C₁₄H₂₉ (tetradecyl), and n-C₁₆H₃₃(hexadecyl).

In the compounds of formula (A) each group R¹ and R² is independently a straight chain, unsubstituted, uninterrupted C₈₋₁₂ alkyl group, for example an alkyl group containing 8, 9, 10, 11 or 12 carbon atoms. The groups R¹ and R² may contain equal or different numbers of carbon atoms.

Non limiting examples of quaternary ammonium compounds of formula (A) include di-n-decyldimethyl ammonium chloride, octyl decyl dimethyl ammonium chloride and dioctyl dimethyl ammonium chloride. Non limiting examples of quaternary ammonium compounds of formula (B) include N,N-benzyldimethyloctylammonium chloride, N,N-benzyldimethyldecylammonium chloride , N-dodecyl-N-benzyl-N,N-dimethylammonium chloride, and N-tetradecyl-N-benzyl-N,N-dimethylammonium chloride, N-hexadecyl-N,N-dimethyl-N-benzylammonium chloride, and N-alkyl dimethyl ethylbenzyl ammonium chloride

### Antimicrobial amines

Antimicrobial amines may be used as additional antimicrobial actives in the method of the present invention. Antimicrobial amines include biguanides, such as chlorhexidine and polyhexamethylenebiguanide; Bis(3-aminopropyl)dodecylamine such as Lonzabac 12.30 (Lonza); guanidine such as Lonzabac GA (Lonza); amines N-C12-C14 alkyltrimethylene di-reaction products with chloroacetic acid commercialized as Rewocid WK-30 by Evonik; and piroctone olamine commercialized as Octopirox® by Clariant.

### Phenolic antimicrobial actives

Antimicrobial phenolic compounds may be used as additional antimicrobial actives in the method of the present invention. Examples of phenolic antimicrobial actives include halogenated benzyl alcohol derivatives such as chloroxylenol (PCMX), halogenated hydroxydiphenylethers such as diclosan and triclosan, monoterpenoid phenols such as thymol and carvacrol, and alkylphenols such as hexylresorcinol.

### Surfactant

The antimicrobial aqueous liquor for use in the method of the present disclosure may comprise one or more surfactants. When surfactant is present it may be more preferably from 10 to 10000 ppm, more preferably from 25 to 7000 ppm, more preferably from 25 to 5000 ppm, more preferably from 25 to 1000 ppm by weight of the antimicrobial aqueous liquor. The surfactant contributes to the cleaning provided by the aqueous liquor when the contacting/treating step is a washing step. The surfactant also contributes to emulsify any non-water soluble ingredients such as perfume that may be added to the composition used to make the antimicrobial aqueous liquor of the method of the present invention.

### Alcohol alkoxylated nonionic surfactants

When alkyl alkoxylated alcohols are present, preferably they are selected from C4-18 alkyl alkoxylated alcohol, for example a C4-18 alkyl ethoxylated alcohol. Preferably the alkyl alkoxylated alcohol has an average degree of alkoxylation of from 1 to 80, preferably from 1 to 50, most preferably from 1 to 30, from 1 to 20, or from 1 to 10. Preferred nonionic surfactants may be C6-16 alkyl alkoxylated, preferably ethoxylated alcohols having an average degree of alkoxylation, preferably ethoxylation of from 1 to 10. The alkyl alkoxylated alcohol can be linear or branched, and substituted or un-substituted

Suitable alcohol alkoxylated nonionic surfactants are according to the formula RO-(A)nH, wherein: R is a primary C4 to C18, preferably a C6 to C16, more preferably a C6 to C14 branched or linear alkyl chain, or a C6 to C28 alkyl benzene chain; A is an ethoxy or propoxy or butoxy unit, or mixtures thereof, and wherein n is from 1 to 30, preferably from 1 to 20, more preferably from 1 to 10, even more preferably from 3 to 8. Preferred R chains for use herein are the C6 to C16 linear or branched alkyl chains.

Suitable branched alkoxylated alcohol may be selected from the group consisting of: C4-C10 alkyl branched alkoxylated alcohols, and mixtures thereof. The branched alkoxylated alcohol can be derived from the alkoxylation of C4-C10 alkyl branched alcohols selected form the group consisting of: C4-C10 primary mono-alcohols having one or more C1-C4 branching groups.

By C4-C10 primary mono-alcohol, it is meant that the main chain of the primary mono-alcohol has a total of from 4 to 10 carbon atoms. The C4-C10 primary mono-alcohol can be selected from the group consisting of: methyl butanol, ethyl butanol, methyl pentanol, ethyl pentanol, methyl hexanol, ethyl hexanol, propyl hexanol, dimethyl hexanol, trimethyl hexanol, methyl heptanol, ethyl heptanol, propyl heptanol, dimethyl heptanol, trimethyl heptanol, methyl octanol, ethyl octanol, propyl octanol, butyl octanol, dimethyl octanol, trimethyl octanol, methyl nonanol, ethyl nonanol, propyl nonanol, butyl nonanol, dimethyl nonanol, trimethyl nonanol and mixtures thereof.

The C4-C10 primary mono-alcohol can be selected from the group consisting of: ethyl hexanol, propyl hexanol, ethyl heptanol, propyl heptanol, ethyl octanol, propyl octanol, butyl octanol, ethyl nonanol, propyl nonanol, butyl nonanol, and mixtures thereof. Preferably the C4-C10 primary mono-alcohol is selected from the group consisting of: ethyl hexanol, propyl hexanol, ethyl heptanol, propyl heptanol, and mixtures thereof. The C4-C10 primary mono-alcohol is most preferably ethyl hexanol, and propyl heptanol.

In the branched alkoxylated alcohol, the one or more C1-C4 branching group can be substituted into the C4-C10 primary mono-alcohol at a C1 to C3 position, preferably at the C1 to C2 position, more preferably at the C2 position, as measured from the hydroxyl group of the starting alcohol. The branched alkoxylated alcohol can comprise from 1 to 14, preferably from 2 to 7, more preferably from 4 to 6 ethoxylate units, and optionally from 1 to 9, preferably from 2 to 7, more preferably from 4 to 6 of propoxylate units.

The branched alkoxylated alcohol is preferably 2-ethyl hexan-1-ol ethoxylated to a degree of from 4 to 6, and propoxylated to a degree of from 4 to 6, more preferably, the alcohol is first propoxylated and then ethoxylated. Another preferred branched alkoxylated alcohols are 2-alkyl-1-alkanols such as alkoxylated C10 guerbet alcohols with 1 to 14, preferably from 2 to 7, more preferably from 3 to 6 ethoxylate or ethoxylate-propoxylate units.

Non-limiting examples of suitable branched alkoxylated alcohols are, for instance, Ecosurf® EH3, EH6, and EH9, commercially available from DOW, and Lutensol® XP alkoxylated Guerbet alcohols & Lutensol® XL ethoxylated Guerbet alcohols available from BASF.

Other alcohol alkoxylated nonionic surfactants preferred herein are alkoxylated nonionic surfactants with a C8, C10, C12, C14 mixtures of C8 to C10, mixtures of C10 to C12, mixtures of C9 to C11, mixtures of C12 to C14 linear alkyl chain and 10 or less ethoxylate units, preferably 3 to 8 ethoxylate units.

Non-limiting examples of suitable alkoxylated nonionic surfactants for use herein are NEODOL® non-ionic surfactants from Shell, and Lutensol®ON surfactants from BASF, other examples of suitable non-ionic surfactants for use herein are Dobanol® 91-2.5 (R is a mixture of C9 and C11 alkyl chains, n is 2.5), Dobanol® 91-5 (R is a mixture of C9 to C11 alkyl chains, n is 5); Dobanol® 91-10 (R is a mixture of C9 to C11 alkyl chains, n is 10); Greenbentine DE60 (R is a C10 linear alkyl chain, n is 6); Marlipal 10-8 (R is a C10 linear alkyl chain, n is 8); Neodol 91-8 (R is a mixture of C9 to C11 alkyl chains, n is 8);; Lutensol ON30 (R is C10 linear alkyl chain, n is 3); Lutensol ON50 (R is C10 linear alkyl chain, n is 5); Lutensol ON70 (R is C10 linear alkyl chain, n is 7); Novel 610-3.5 (R is mixture of C6 to C10 linear alkyl chains, n is 3.5); Novel 810FD-5 (R is mixture of C8 to C10 linear alkyl chains, n is 5); Novel 10-4 (R is C10 linear alkyl chain, n is 4); Novel 1412-3 (R is mixture of C12 to C14 linear alkyl chains, n is 3); Novel 1412-7 (R is a mixture of C12 to C14 alkyl chain and n is 7); Lialethl® 11-5 (R is a C11 linear alkyl chain, n is 5); or mixtures thereof.

The alkoxylated nonionic surfactant may be a secondary alcohol ethoxylate such as for example the Tergitol™15S surfactants having the general formula shown below and commercially available from DOW

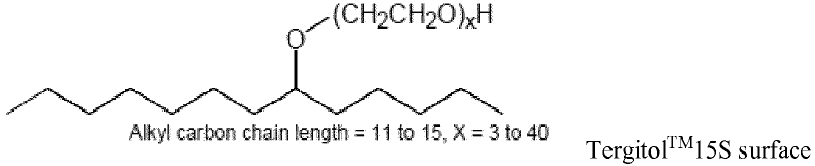

Preferred secondary alcohol ethoxylate surfactants have 3-9 EO units.

Another suitable alkoxylated nonionic surfactant is an alkyl ethoxy alkoxy alcohol, preferably wherein the alkoxy part of the molecule is propoxy, or butoxy, or propoxy-butoxy. More preferred alkyl ethoxy alkoxy alcohols are of formula (II): 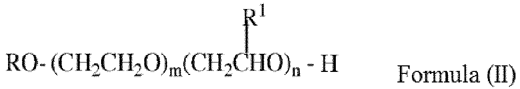 wherein:
R is a branched or unbranched alkyl group having 8 to 16 carbon atoms;
R1 is a branched or unbranched alkyl group having 1 to 5 carbon atoms;
n is from 1 to 10; and m is from 6 to 35.

R is preferably from 12 to 15, preferably 13 carbon atoms. R1 is preferably a branched alkyl group having from 1 to 2 carbon atoms. n is preferably 1 to 5. m is preferably from 8 to 25. Preferably, the weight average molecular weight of the ethoxylated alkoxylated nonionic surfactant of formula (II) is from 500 to 2000g/mol, more preferably from 600 to 1700 g/mol, most preferably 800 to 1500 g/mol.

The ethoxylated alkoxylated nonionic surfactant can be a polyoxyalkylene copolymer. The polyoxyalkylene copolymer can be a block-heteric ethoxylated alkoxylated nonionic surfactant, though block-block surfactants are preferred. Suitable polyoxyalkylene block copolymers include ethylene oxide/propylene oxide block polymers, of formula (III):

(EO)x(PO)y(EO)x,

or

(PO)x(EO)y(PO)x

wherein EO represents an ethylene oxide unit, PO represents a propylene oxide unit, and x and y are numbers detailing the average number of moles ethylene oxide and propylene oxide in each mole of product. Such materials tend to have higher molecular weights than most non-ionic surfactants, and as such can range between 1000 and 30000 g/mol, although the molecular weight should be above 2200 and preferably below 13000 to be in accordance with the invention. A preferred range for the molecular weight of the polymeric non-ionic surfactant is from 2400 to 11500 Daltons. BASF (Mount Olive, N.J.) manufactures a suitable set of derivatives and markets them under the Pluronic trademarks. Examples of these are Pluronic (trademark) F77, L62 and F88 which have the molecular weight of 6600, 2450 and 11400 g/mol respectively.

Most preferably the alkoxylated nonionic surfactant is selected from the group consisting of: C9-C11 EO8 alcohol ethoxylate, C12-C14 EO7 alcohol ethoxylate, 2-propylheptyl EO8 alcohol alkoxylate such as Lutensol XL89-BASF; 2-propylheptyl EO5 alcohol alkoxylate such as Lutensol XL50-BASF; C10 EO5 alcohol ethoxylate such as Lutensol ON 50-BASF; C10 EO7 alcohol ethoxylate such as Lutensol ON 70-BASF; C8-C10 EO5 alcohol ethoxylate such as Novel 810 FD5- Sasol; C10 EO4 alcohol ethoxylate such as Novel 10-4 Sasol; Tergitol 15-S-3; Tergitol 15-S-5; Tergitol 15-S-7; and Ethyl hexanol PO5EO6 such as Ecosurf EH6-Dow.

### Alkyl Polyglucosides

Alkyl polyglycosides are biodegradable nonionic surfactants which are well known in the art, and can be used in the method of the present invention. Suitable alkyl polyglycosides can have the general formula CnH2n+1O(C6H10O5)xH wherein n is preferably from 8 to 16, more preferably 8 to 14, and x is at least 1. Examples of suitable alkyl polyglucoside surfactants are the TRITON™ alkyl polyglucosides from Dow; Agnique PG, Disponil APG and Glucopon alkyl polyglucosides from BASF. Preferred alkyl polyglucoside surfactants are those where n is 8 to 12, more preferably 8 to 10, such as for example Triton™ CG50 (Dow).

### Amine Oxide

Suitable amine oxide surfactants include: R1R2R3NO wherein each of R1, R2 and R3 is independently a saturated or unsaturated, substituted or unsubstituted, linear or branched hydrocarbon chain having from 1 to 30 carbon atoms. Preferred amine oxide surfactants are amine oxides having the following formula: R1R2R3NO wherein R1 is a hydrocarbon chain comprising from 1 to 30 carbon atoms, preferably from 6 to 20, more preferably from 8 to 16 and wherein R2 and R3 are independently saturated or unsaturated, substituted or unsubstituted, linear or branched hydrocarbon chains comprising from 1 to 4 carbon atoms, preferably from 1 to 3 carbon atoms, and more preferably are methyl groups. R1 may be a saturated or unsaturated, substituted or unsubstituted linear or branched hydrocarbon chain.

Highly preferred amine oxides are C8 dimethyl amine oxide, C10 dimethyl amine oxide, C12 dimethyl amine oxide, C12-C14 dimethyl amine oxide, C14 dimethyl amine oxide, and mixtures thereof. C8 dimethyl amine oxide is commercially available under the trade name Genaminox® OC from Clariant; C10 dimethyl amine oxide is commercially available under the trade name Genaminox® K-10 from Clariant; C12 dimethyl amine oxide is commercially available under the trade name Genaminox® LA from Clariant and of Empigen OB from Huntsman; C14 amine oxide is commercially available under the trade name of Empigen OH 25 from Huntsman. Other suitable amine oxide surfactants are cocoyldiethoxy amine oxide available under the trade name of Genaminox CHE from Clariant, and cocamidopropyl amine oxide commercially available under the trade name of Empigen OS/A from Huntsman. Particularly preferred amine oxide surfactants are C10 dimethyl amine oxide such as Genaminox K-10, C12 dimethyl amine oxide such as Empigen OB, C12-C14 dimethyl amine oxide, and C14 dimethyl amine oxide.

### Alkyl glucamide surfactants

Glucamide surfactants may be used in the method of the present invention. Glucamide surfactants are non- ionic surfactants in which the hydrophilic moiety (an amino-sugar derivative) and the hydrophobic moiety (a fatty acid) are linked via amide bonds. This results in a chemical linkage, which is highly stable under alkaline conditions. Particularly preferred alkyl glucamide surfactants are N-alkyl-N-acylglucamides of the formula (III):

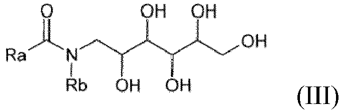

Wherein Ra is a linear or branched, saturated or unsaturated hydrocarbyl group having 6 to 22 carbon atoms, and Rb is a C1-C4 alkyl group. Particularly preferably, Rb in formula (I) is a methyl group. Non-limiting examples of these glucamide surfactants are: N-octanoyl-N-methylglucamide, N-nonanoyl-N-methylglucamide, N-decanoyl-N-methylglucamide, N-dodecanoyl-N-methylglucamide, N-cocoyl-N-methylglucamide, (available under the trade name of GlucoPure Foam by from Clariant), N-lauroyl/myristoyl-N-methylglucamide, (available under the trade name of GlucoPure Deg by from Clariant), and N-octanoyl/decanoyl-N-methylglucaminemethylglucamide, (available under the trade name of GlucoPure Wet by Clariant).

### Zwitterionic and amphoteric surfactants:

Suitable zwitterionic surfactants for use in the method of the present invention typically contain both cationic and anionic groups in substantially equivalent proportions so as to be electrically neutral at the pH of use, and are well known in the art. Some common examples of zwitterionic surfactants are described in US. Pat. Nos. 2,082,275, 2,702,279 and 2,255,082.

Suitable zwitteronic surfactants include betaines such alkyl betaines, alkylamidobetaine, amidazoliniumbetaine, sulfobetaine (INCI Sultaines) as well as the phosphobetaine. Suitable betaines are the alkyl betaines of the formula (Ia), the alkyl amido betaine of the formula (Ib), the sulfo betaines of the formula (Ic) and the amido sulfobetaine of the formula (Id);

R1-N+(CH3)2-CH2COO- (Ia)

R1-CO-NH(CH2)3-N+(CH3)2-CH2COO- (Ib)

R1-N+(CH3)2-CH2CH(OH)CH2SO3- (Ic)

R1-CO-NH-(CH2)3-N+(CH3)2-CH2CH(OH)CH2SO3- (Id)

in which R1 is a saturated or unsaturated C6-C22 alkyl residue, preferably C8-C18 alkyl residue. Particularly preferred are betaines of the formula (Ia) such as for example N-alkyl-N-dimethyl betaine like the one sold under the name of Empigen® BB by Huntsman, and (Id) such as for example cocoamidopropyl hydroxysultaine sold under the name of Mackam ®50 SB by Solvay Novacare.

Other examples of suitable betaines and sulfobetaine are the following designated in accordance with [INCI]: Almondamidopropyl of betaines, Apricotamidopropyl betaines, Avocadamidopropyl of betaines, Babassuamidopropyl of betaines, Behenamidopropyl betaines, Behenyl of betaines, betaines, Canolamidopropyl betaines, Capryl/Capramidopropyl betaines, Carnitine, Cetyl of betaines, Cocamidoethyl of betaines, Cocamidopropyl betaines, , Coco betaines, Coco Hydroxysultaine, Coco/Oleamidopropyl betaines, Coco Sultaine, Decyl of betaines, Dihydroxyethyl Oleyl Glycinate, Dihydroxyethyl Soy Glycinate, Dihydroxyethyl Stearyl Glycinate, Dihydroxyethyl Tallow Glycinate, Dimethicone Propyl of PG-betaines, Erucamidopropyl Hydroxysultaine, Hydrogenated Tallow of betaines, Isostearam idopropyl betaines, Lauramidopropyl betaines, Lauryl of betaines, Lauryl Hydroxysultaine, Lauryl Sultaine, MiIkamidopropyl betaines, Minkamidopropyl of betaines, Myristamidopropyl betaines, Myristyl of betaines, Oleamidopropyl betaines, Oleamidopropyl Hydroxysultaine, Oleyl of betaines, Olivamidopropyl of betaines, Palmam idopropyl betaines, Palmitan idopropyl betaines, Palmitoyl Carnitine, Palm Kernelamidopropyl betaines, Polytetrafluoroethylene Acetoxypropyl of betaines, Ricinoleamidopropyl betaines, Sesam idopropyl betaines, Soyamidopropyl betaines, Stearamidopropyl betaines, Stearyl of betaines, Tallowamidopropyl betaines, Tallowamidopropyl Hydroxysultaine, Tallow of betaines, Tallow Dihydroxyethyl of betaines, Undecylenamidopropyl betaines and Wheat Germamidopropyl betaines.

If a zwitterionic surfactant is used, it is preferably a betaine of the formula Ia such as for example N-alkyl-N-dimethyl betaine like the one sold under the trade name of Empigen® BB by Huntsman., or an alkylamidopropyl hydroxysultaine such as for example Mackam®50 SB (Solvay Novacare) It has been found these betaines greatly increase the antibacterial efficacy of octenidine hydrochloride.

Amphoteric surfactants can be either cationic or anionic depending upon the pH of the aqueous liquid. Suitable amphoteric surfactants include dodecylbeta-alanine, N-alkyltaurines such as the one prepared by reacting dodecylamine with sodium isethionate, as taught in US. Pat. No. 2,658,072, N-higher alkylaspartic acids such as those taught in U.S. Pat. No. 2,438,091. Other suitable amphoteric surfactants are the products sold under the trade name Miranol by Solvay-Novecare such as, for example, sodium lauroamphoacetate (Miranol Ultra L-32E), sodium stearoampho acetate (Miranol DM), disodium cocoamphodiacetate (Miranol C2m Conc NP), disodium lauroamphodiacetate (Miranol BM Conc), disodium capryloampho dipropionate (Miranol JBS), sodium mixed C8 amphocarboxylate (Miranol JEM Conc), and sodium capryloampho hydroxypropyl sulfonate (Miranol JS). Other non-limiting examples of suitable amphoteric surfactants are disodium capryloamphodiacetate (Mackam 2CY 75-Solvay Novecare), octyliminodipropionate (Ampholak YJH40-Akzo Nobel), sodium lauriminodipropionate (Mirataine H2C-HA-Solvay Novecare), and sodium lauroamphohydroxypropylsulfonate (Mackam LS- Solvay Novecare).

### Cationic surfactants:

Cationic surfactants can be used in the method of the present invention. Suitable cationic surfactants include C8 to C16 alkyl trimethyl ammonium chloride, C8 to C16 alkyl-hydroxyethyl-dimethyl ammonium chloride, particularly preferred cationic surfactants are dodecyl-(2-hydroxyethyl)-dimethyl ammonium chloride and dodecyl trimethyl ammonium chloride.

When the antimicrobial aqueous liquor for use in the method of the present invention comprises surfactant, particularly preferred surfactants for use herein include nonionic surfactants, in particular branched alcohol alkoxylates, more in particular 2-ethyl hexan-1-ol ethoxylated to a degree of from 4 to 6, and propoxylated to a degree of from 4 to 6, more preferably, the alcohol is first propoxylated and then ethoxylated, and 2-alkyl-1-alkanols such as alkoxylated C10 guerbet alcohols with 1 to 14, preferably 2 to 8, more preferably 3 to 6 ethoxylate or ethoxylate-propoxylate units. Other particularly preferred non-ionic surfactants include alcohol alkoxylated nonionic surfactants with C8, C10, C12, mixtures of C8 to C10, mixtures of C10 to C12, mixtures of C9 to C11, mixtures of C12 to C14 alkyl chain and 10 or less ethoxylate units, preferably 3 to 8 ethoxylate units. Most preferably the alkoxylated nonionic surfactant is selected from the group consisting of: C12-C14 EO7 alcohol ethoxylate, C9-C11 EO8 alcohol ethoxylate (Neodol 91-8 Sasol), 2-propylheptyl EO8 alcohol alkoxylate (Lutensol XL89-BASF); 2-propylheptyl EO5 alcohol alkoxylate (Lutensol XL50-BASF); C10 EO5 alcohol ethoxylate (Lutensol ON 50-BASF); C10 EO7 alcohol ethoxylate (Lutensol ON 70-BASF); C8-C10 EO5 alcohol ethoxylate (Novel 810 FD5 Sasol); C10 EO4 alcohol ethoxylate (Novel 10-4 Sasol); Tergitol 15-S-3; Tergitol 15-S-5; Tergitol 15-S-7; and Ethyl hexanol PO5EO6 (Ecosurf EH6-Dow).

Other particularly preferred surfactants for use herein include linear amine oxide surfactants, in particular C8-C14 dimethyl amine oxide, more in particular C10 dimethyl amine oxide; C12 dimethyl amine oxide, and C14 dimethyl amine oxide; alkyldimethylbetaine surfactants, more in particular N,N-Dimethyl-N-dodecylglycine betaine (Empigen BB-Huntsman); alkylamidopropyl hydroxysultaine surfactants (Mackam® 50 SB); alkyl glucamide surfactants such as N-alkyl-N-acylglucamide preferably N-decanoyl-N-methylglucamine, and the alkyl glucamide surfactants sold under the name of GlucoPure®, GlucoTain®, and GlucoWet® by Clariant; alkylpolyglucoside surfactants, more in particular C8 to C12 alkyl polyglucosides, more preferably C8 to C10 alkyl polyglucosides such as for example Triton® CG50 (Dow)

Other particularly preferred surfactants for use herein include cationic surfactants such as dodecyl-(2-hydroxyethyl)-dimethyl ammonium chloride and dodecyl trimethyl ammonium chloride.

These surfactants may improve the antimicrobial activity of the bispyridinium alkane, in particular the antimicrobial activity of octenidine dihydrochloride.

Other suitable additional surfactants can be found in McCutcheon's Detergents and Emulsifiers, North American Ed. 1980.

### Optional ingredients

### Chelating agent

The antimicrobial aqueous liquid to be used in the method of the present invention may comprise chelating agents and/or crystal growth inhibitor. Suitable molecules include copper, iron and/or manganese chelating agents and mixtures thereof. Suitable molecules include aminocarboxylates, aminophosphonates, succinates, salts thereof, and mixtures thereof. Non-limiting examples of suitable chelants for use herein include ethylenediaminetetracetates, N-(hydroxyethyl)ethylenediaminetriacetates, nitrilotriacetates, ethylenediamine tetraproprionates, triethylenetetraaminehexacetates, diethylenetriamine-pentaacetates, ethanoldiglycines, ethylenediaminetetrakis (methylenephosphonates), diethylenetriamine penta(methylene phosphonic acid) (DTPMP), ethylenediamine disuccinate (EDDS), hydroxyethanedimethylenephosphonic acid (HEDP), methylglycinediacetic acid (MGDA), diethylenetriaminepentaacetic acid (DTPA), salts thereof, and mixtures thereof. Other nonlimiting examples of chelants of use in the present invention are found in U.S. Patent Nos. 7445644, 7585376 and 2009/0176684A1. Other suitable chelating agents for use herein are the commercial DEQUEST series, and chelants from Monsanto, DuPont, and Nalco, Inc.

### Other optional ingredients

The aqueous liquor disclosed herein may also contain one or more adjuncts. Suitable adjuncts that can be used in the method of the present invention are polymers, such as soil release polymers and polymers to prevent soils from re-depositing back onto the fabrics; enzymes; builders; buffers; electrolytes; fragrances; dyes; brighteners; dispersants; foaming control agents; essential oils; hydrotropes, and mixtures thereof.

### pH

The antimicrobial aqueous liquor to be used in the method of the present invention may have a pH ranging from about 3 to 11, or from about 3.5 to 10.5, or from about 4 to 10, or from about 4.5 to 9.5, or from about 5 to 9, or from about 5.5 to 8.5, or from about 2.2 to 7.5.

### EXAMPLES

### ANTIBACTERIAL EFFICACY (Minimum Biocidal Concentration in suspension)

The antimicrobial efficacy of the antimicrobial agent in the aqueous liquor is determined by measuring its Minimum Biocidal Concentration (MBC). The MBC is defined as the lowest absolute concentration of the particular antimicrobial active which provides complete kill (zero bacterial growth). The MBC of the bispyridinium alkane antimicrobial active is determined against the bacterium, *Staphylococcus aureus* (*S.aureus* - ATCC #6538), a gram positive bacterium, and against *Escherichia coli (E.coli* ATCC #8739) These microorganisms are representative of natural contaminants in many consumer and industrial applications. The bacteria inoculum is prepared by transferring several colonies from a Tryptone Soy Agar (TSA) plate to a saline solution (0.85% NaCl) comprising 5% of horse serum as additional soil load, the bacteria concentration in this saline solution is determined by measuring the % Transmittance at 425 nm and adjusted by either adding more bacteria or more saline solution until the %Transmittance at 425 nm is between 23-25% for *S.aureus* and 31-33% for *E.coli.* These % Transmittance values correspond to a bacteria concentration of 10⁸CFU/ml.

The antimicrobial agent was added to the aqueous liquor to be used in the method of the present invention at a level of 200 ppm, or 100 ppm or 50 ppm. 200 µL of the antimicrobial aqueous liquor was dosed into one well of row A of a 96 well microtiter plate. Each subsequent well (rows B to G) were dosed with 100 µL of the same aqueous liquor, without the addition of the antimicrobial agent. 100 µL of the antimicrobial aqueous liquor was transferred from row A to row B and mixed. 100 µL of the antimicrobial aqueous liquor was then transferred from row B to row C and mixed, and the process repeated to row G. As such, the concentration of the antimicrobial agent underwent two-fold dilution in adjacent wells, while the concentration of any adjunct present in the aqueous liquor remained constant across all the wells in the same column.

10 µL of the 10⁸CFU/ml bacteria suspension in saline was added to wells A to F of the microtiter plate with row G kept as a nil bacteria control. The final volume in each well was 110 µL, except for row G which comprised 100 µL of the hard surface cleaning composition and no bacteria suspension. Bacterial inoculation to each column was staggered by 30 seconds to allow for equal incubation times in all wells so that the contact time between the bacteria and the antimicrobial active for all samples was 6 mins. After this contact time, 10µL of each test solution was transferred to 90µL of neutraliser solution (Modified Letheen Broth + 1.5% Polysorbate 80, supplied by BioMérieux) to stop the antimicrobial action of the antimicrobial active matching the stagger of the inoculation. 2µL of this solution was plated onto a TSA plate matching the stagger of the inoculation so that all samples are exposed to the neutralizer for the same period of time. The plate is incubated at 32.5°C for 24-48h for *Saureus*, and 24h for *E.coli.* MBC concentration is taken as the lowest concentration of the antimicrobial active at which no visible colony growth is observed on the TSA plate.

### ANTIBACTERIAL EFFICAY ON FABRICS

The bactericidal efficacy on fabric surfaces of treatments with antimicrobial aqueous liquors comprising different antimicrobial agents was determined against the bacterium *Staphylococcus aureus* (*S.aureus* - ATCC #6538). The bacteria inoculum was prepared by transferring several colonies from a Tryptone Soy Agar (TSA) plate to a saline solution (0.85% NaCl) comprising 5% horse serum as additional soil load, the bacteria concentration in this saline solution was determined by measuring the % Transmittance at 425 nm and adjusted by either adding more bacteria or more saline solution until the %Transmittance at 425 nm is between 23-25% which corresponds to a bacteria concentration of 10⁸CFU/ml.

Fabric carriers, 1cm x 1cm disks of cotton sterilized by autoclaving, were inoculated with 30 µL of the 10⁸ CFU/ml bacteria inoculum and incubated for 20 mins at 32°C. After this incubation period, 3 fabric carriers were placed within bundles of 10 clean sterile cotton disks and secured by placing a sterile 30mm paperclip to the edge of the bundle. The fabric bundles were placed in 30 ml of antimicrobial aqueous liquors to be used in the method of the present invention comprising 3750 ppm of C12-C14 EO7 alkyl ethoxylate non ionic surfactant and 625 ppm of either bispyridinium alkane (octenidine dihydrochloride), N-(3-aminopropyl)-N-dodecylpropane-1,3-diamine (Lonzabac 12.30) or benzalkonium chloride (Sigma -Aldrich CAS number 63449-41-2) as antimicrobial actives. The contact time between the bacteria in the fabric carriers and the antimicrobial aqueous liquor was 1 h. After this contact time, each fabric bundle was rinsed for 5 minutes with water and the 3 fabric carries transferred to 9 ml of neutralizer solution (Modified Letheen Broth + 1.5% Polysorbate 80, supplied by BioMérieux) to stop the antimicrobial action of the antimicrobial active. The neutralizer tube containing the fabric carriers was vortexed in a Genie 2 vortexer set at speed 7 for 30 seconds. Ten-fold dilutions of the neutralizer + fabric carrier solution were prepared by transferring 1ml of the neutralizer solution to 9ml of neutralizer solution, this solution was further diluted in neutralizer solution following the same protocol so that serial ten-fold dilutions were obtained. 100 µL of each of the serial dilutions were plated on a TSA plate, plates were incubated at 32°C for 18 hours, after this incubation time, the number of colonies in each plate was counted. The target dilution used to determine the bactericidal efficacy of aqueous liquor of the method of the present invention was the one delivering 30-300 CFU in the plate, the data reported for each antimicrobial active is the average of the bacteria number in three plates multiplied by the target dilution. The log reduction for each antibacterial treatment vs nil antibacterial active reference is the log10 of the number obtained by dividing the number of colonies recovered from the fabrics treated with the nil antibacterial reference aqueous liquor by the number of colonies recovered from the fabrics treated with aqueous liquors comprising the different antimicrobial actives.

### EXAMPLES

### EXAMPLE 1: Comparison of antibacterial efficacy of bispyridinium alkane vs other antibacterial actives in different aqueous liquors

The antibacterial efficacy of the bispyridinium alkane octenidine hydrochloride was compared to that of N-(3-aminopropyl)-N-dodecylpropane-1,3-diamine (Lonzabac 12.30-Lonza) and n-alkyl dimethyl benzyl ammonium chloride/ n-alkyl dimethyl ethylbenzyl ammonium chloride (BTC2125-Stepan) in different aqueous liquors. The minimal biocidal concentration (MBC) in suspension of each antibacterial active against a gram positive bacterium *(Staphylococcus aureus)* and a gram negative bacterium (*Escherichia coli*) was determined after 6 minutes contact time. Results are shown in Table 1 and Table 2.

| **Table 1: MBC in suspension of bispyridinium alkane (Octenidine-Tokyo Chemicals) vs N-(3-aminopropyl)-N-dodecylpropane-1,3-diamine (Lonzabac 12.30-Lonza) in different aqueous liquors** | | | | |
|---|---|---|---|---|
| Aqueous liquor | Ingredients | Weight % | Octenidine MBC (ppm) *S.aureus* | Lonzabac 12 MBC (ppm) *S.aureus* |
| 1 | Deionized water | | 3.125 | 25 |
| 2 | Octyliminodipropionate (1) | 0.1% | 3.125 | 25 |
| 3 | C12-C14 EO7 alcohol ethoxylate | 0.1% | 6.25 | 25 |
| 4 | Disodium capryloamphodiacetate (2) | 0.025% | 3.125 | 25 |
| 5 | Sodium lauroamphohydroxypropylsulfonate (3) | 0.0062% | 3.125 | 25 |

| **Table 2: MBC in suspension of bispyridinium alkane (Octenidine-Tokyo Chemicals) vs N-(3-aminopropyl)-N-dodecylpropane-1,3-diamine (Lonzabac 12.30-Lonza) and n-alkyl dimethyl benzyl ammonium chloride/ n-alkyl dimethyl ethylbenzyl ammonium chloride (BTC2125-Stepan) in different aqueous liquors** | | | | | |
|---|---|---|---|---|---|
| Aqueous liquor | Ingredients | Weight% | Octenidine MBC (ppm) *E.coli* | Lonzabac 12.30 MBC (ppm) *E.coli* | BTC2125 MBC (ppm) *E.coli* |
| 7 | Octyliminodipropionate (1) | 0.0062% | 3.125 | 50 | 12.5 |
| 8 | C12-C14 EO7 alcohol ethoxylate | 0.0062% | 6.25 | 25 | 12.5 |

| | | | | | |
|---|---|---|---|---|---|
| (1) Ampholak YJH 40 (2) Mackam 2CY75 (3) Miranol JS | | | | | |

Table 1 and Table 2 show that the bispyridinium alkane octenidine dihydrochloride has higher antimicrobial efficacy, demonstrated by a lower minimal biocidal concentration (MBC), than the antimicrobial actives N-(3-aminopropyl)-N-dodecylpropane-1,3-diamine (Lonzabac 12.30-Lonza) and n-alkyl dimethyl benzyl ammonium chloride/ n-alkyl dimethyl ethylbenzyl ammonium chloride (BTC2125-Stepan) in all the aqueous liquors exemplified. The data presented show that high levels of antibacterial efficacy can be achieved by treatments with aqueous liquor comprising very low levels of the antimicrobial bispyridinium alkane.

### EXAMPLE 2: Comparison of the antibacterial efficacy of bispyridinium alkane vs other antibacterial actives in different aqueous liquors

Cotton fabrics inoculated with bacteria were treated for 1 hour with aqueous liquors comprising 3750 ppm of C12-C14 EO7 alkyl ethoxylate non ionic surfactant and either no antibacterial active (ref) or 625 ppm of octenidine hydrochloride, 625 ppm of Lonzabac 12.30 or 625 ppm of benzalkonium chloride as antibacterial actives. After the treatment, the bacteria remaining on the treated fabrics were extracted and quantified. Results are shown in Table 3. It can be seen that the treatment done with the aqueous liquor comprising octenidine hydrochloride provides better antibacterial efficacy, i.e. less bacteria remaining on fabrics, and higher log reduction, than the treatments done with aqueous liquors comprising either Lonzabac or benzalkonium chloride.

| **Table 3: Antimicrobial efficacy on cotton fabrics of aqueous liquors comprising different antimicrobial actives** | | |
|---|---|---|
| **Aqueous liquor** | **Number of bacteria recovered from treated fabrics** | **Log reduction vs treatment with nil AB active reference** |
| **3750 ppm C12-C14 EO7 No AB active** | 9.1 X 10⁵ CFU/ml | REF |
| **3750 ppm C12-C14 EO7 625 ppm Octenidine** | 2.8 X 10³ CFU/ml | Log 2.5 |
| **3750 ppm C12-C14 EO7 625 ppm Lonzabac 12.30** | 1.9 X 10⁵ CFU/ml | Log 0.7 |
| **3750 ppm C12-C14 EO7 625 ppm Benzalkonium Chloride** | 5.8 X 10⁴ CFU/ml | Log 1.2 |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method of treating a fabric comprising the step of contacting the fabric with an aqueous liquor comprising a bispyridinium alkane antimicrobial active and wherein the aqueous liquor is substantially free of anionic surfactant.

2. A method according to claim 1 wherein the bispyridinium alkane antimicrobial active is octenidine dihydrochloride.

3. A method according to any preceding claim, wherein the aqueous liquor comprises from about 10 to about 25000 ppm of bispyridinium alkane antimicrobial active.

4. A method according to any preceding claim, wherein the aqueous liquor comprises from about 20 to about 15000 ppm of bispyridinium alkane antimicrobial active.

5. A method according to any preceding claim, wherein the aqueous liquor comprises from about 30 to about 5000 ppm of bispyridinium alkane antimicrobial active.

6. A method according to any preceding claim, wherein the aqueous liquor further comprises a fabric treatment adjunct.

7. A method according to any preceding claim, wherein the treatment adjunct comprises a surfactant other than an anionic surfactant.

8. A method according to any preceding claim, wherein the aqueous liquor further comprises an additional antimicrobial active.

9. A method according to the preceding claim, wherein the additional antimicrobial active is selected from the group consisting of quaternary ammonium compounds, antimicrobial amines, phenolic antimicrobial actives and mixtures thereof.

10. A method according to any preceding claim, wherein the aqueous liquor further comprises a perfume.

11. A method according to any preceding claim wherein the fabric is contacted with the aqueous liquor inside or outside of a washing machine.

12. A method according to any preceding claim wherein the fabric is contacted with the aqueous liquor independently of a laundry washing process.

13. A method according to any of claims 1 to 11 wherein the fabric is contacted with the aqueous liquor in a laundry washing process during the rinse cycle and/or pre-treat cycle.

14. A method according to any of claims 1 to 11 wherein the fabric is contacted with the aqueous liquor in the main wash of a laundry washing process.

15. A method according to the preceding claim wherein the aqueous liquor comprises a laundry detergent comprising non-ionic surfactant.
